# EUROPEAN PATENT APPLICATION

(11) **EP 2 157 774 A1**
(43) Date of publication of application: **24.02.2010**
(21) Application number: 08764322.7
(22) Date of filing: 16.05.2008
(51) Int. Cl.: H04M 11/08, H04Q 7/22

(54) **COMMUNICATION DEVICE AND COMMUNICATION METHOD**

(30) Priority: 12.06.2007 JP 2007155768
(71) Applicant: Nec Corporation, Tokyo 108-8001 (JP)
(72) Inventor: OKUYAMA, Yoshiaki, Tokyo 108-8001 (JP); MURAKAMI, Takuya, Tokyo 108-8001 (JP); OKUYAMA, Gen, Tokyo 108-8001 (JP)
(74) Representative: Vossius & Partner
(86) International application number: PCT/JP2008/059051
(87) International publication number: WO 2008/152881

(57) **Abstract**

A determination unit (101) determines, on the basis of the information of a first network (111) used to acquire a communication application and a communication state including a communication method used for acquisition, a network usable by the communication application using a criterion prepared in advance. For example, the determination unit (101) determines a second network (112) as a network usable by the communication application. A communication unit (102) executes communication by the communication application using the network determined by the determination unit (101). For example, the communication unit (102) executes communication by the communication application using the second network (112) determined as usable

## Description

### Technical Field

The present invention relates to a communication apparatus, communication method, and program which enable to securely execute a downloaded communication application.

### Background Art

Many of recent communication terminals have a plurality of wireless communication means and use connection networks while switching them as needed. For example, a terminal has been put into practical use, which has a means for connecting to a cellular network and a means for connecting to a wireless LAN so that it can be connected to a cellular network outdoors and to a wireless LAN indoors. Such a terminal uses various kinds of networks selectively or simultaneously. There exist various networks as connection targets, and they have considerably different operation policies. For example, an IP network or a corporate intranet of a cellular carrier introduces an authentication or encryption means and is supposedly very secure. However, there are also insecure networks such as a free wireless LAN spot without any authentication or encryption means.

A recent terminal can download a communication application from a network and receive various services using the downloaded application. An example is a Java® application for a portable phone. If such a terminal uses a secure network and an insecure network selectively or simultaneously, there is a threat to security .

Assume that a malicious application is present on an insecure network. The terminal downloads this application and executes it when it is connected to a secure network. The malicious application may attack the secure network, steal information, and conduct destructive activities inside the network.

Consider a Java® applet. A Java® applet can normally communicate with only a site where the applet is downloaded. For example, an application downloaded from "http://www.example.com" can communicate with only "www.example.com" under restrictions of a Java® VM (Virtual Machine).

In some insecure networks, however, not only applications and Web servers but even a DNS (Domain Name Server) is unreliable. A malicious network administrator can install a malicious DNS server and make a user download an application from the false server. Assume that a terminal has downloaded an application from a Web server with a false name "http://www.some-secure-server.com". This application is permitted to communicate with "www.some-secure-server.com". If a server having the same DNS name exists on a secure network, the malicious application can communicate with it. The application can start a so-called attack to the server in the network. That is, the application on the insecure network can attack the server on the secure network. This is a serious problem.

Next, assume that a terminal has downloaded an authentic application from "http://www.some-secure-server.com" on a secure network. If the terminal which has done the download is connected to the above-described malicious network, the application is connected to the false server, and the communication contents may be analyzed. More specifically, the communication contents of the application on the secure network may be led to the insecure network and analyzed. This can pose a serious problem in an application closed in a secure network environment.

To solve these problems, a method has been disclosed, which compares a communication network corresponding to an application with a currently connected communication network, and if the communication networks do not coincide, restricts the functions of the application (reference 1: Japanese Patent Laid-Open No. 2004-320369).

### Disclosure of Invention

### Problems to be Solved by the Invention

In the method described in reference 1, however, a communication network to be used by an application must be set in advance in the application or manually set by a user. No method of automatically determining the communication network is provided. For example, the method has no function of automatically associating a communication network used for download with an application.

The present invention has been made to solve the above-described problems, and has as its exemplary object to, when a terminal (communication apparatus) executes a downloaded communication application, automatically determine a network whose use is to be permitted and automatically impose communication restrictions of the application.

### Means of Solution to the Problems

According to an exemplary aspect of the present invention, there is provided a communication apparatus comprising at least determination means for determining, on the basis of information of a network used to acquire a communication application and a communication state including a communication method used for acquisition, a network usable by the communication application using a criterion prepared in advance, and communication means for executing communication by the communication application using the network determined by the determination means.

According to an exemplary aspect of the present invention, there is also provided a communication method comprising at least the steps of determining, on the basis of information of a network used to acquire a communication application and a communication state including a communication method used for acquisition, a network usable by the communication application using a criterion prepared in advance, and executing communication by the communication application using the determined network.

According to an exemplary aspect of the present invention, there is also provided a computer-readable storage medium storing a program for causing a computer to implement at least a function of determining, on the basis of information of a network used to acquire a communication application and a communication state including a communication method used for acquisition, a network usable by the communication application using a criterion prepared in advance, and a function of executing communication by the communication application using the determined network.

### Effects of the Invention

As described above, according to the exemplary aspects of the present invention, on the basis of the information of a network used to acquire a communication application and a communication state including a communication method used for acquisition, a network usable by the communication application is determined using a criterion prepared in advance. It is therefore possible to obtain an excellent effect of, when a terminal (communication apparatus) executes a downloaded communication application, automatically determining a network whose use is to be permitted and automatically imposing communication restrictions of the application. Brief Descriptions of Drawings
Fig. 1 is a block diagram showing an example of the arrangement of a communication apparatus according to the first exemplary embodiment of the present invention;
Fig. 2 is a block diagram showing an example of the arrangement of a communication apparatus according to the second exemplary embodiment of the present invention;
Fig. 3 is a sequence chart for explaining an example of the operation of the communication apparatus according to the second exemplary embodiment of the present invention;
Fig. 4 is a sequence chart for explaining an example of the operation of the communication apparatus according to the second exemplary embodiment of the present invention;
Fig. 5 is a block diagram showing an example of the arrangement of a communication apparatus according to the third exemplary embodiment of the present invention; and
Fig. 6 is a sequence chart for explaining an example of the operation of the communication apparatus according to the third exemplary embodiment of the present invention.

### Best Mode for Carrying Out the Invention

The best mode for carrying out the present invention will now be described in detail with reference to the accompanying drawings.

### [First Exemplary Embodiment]

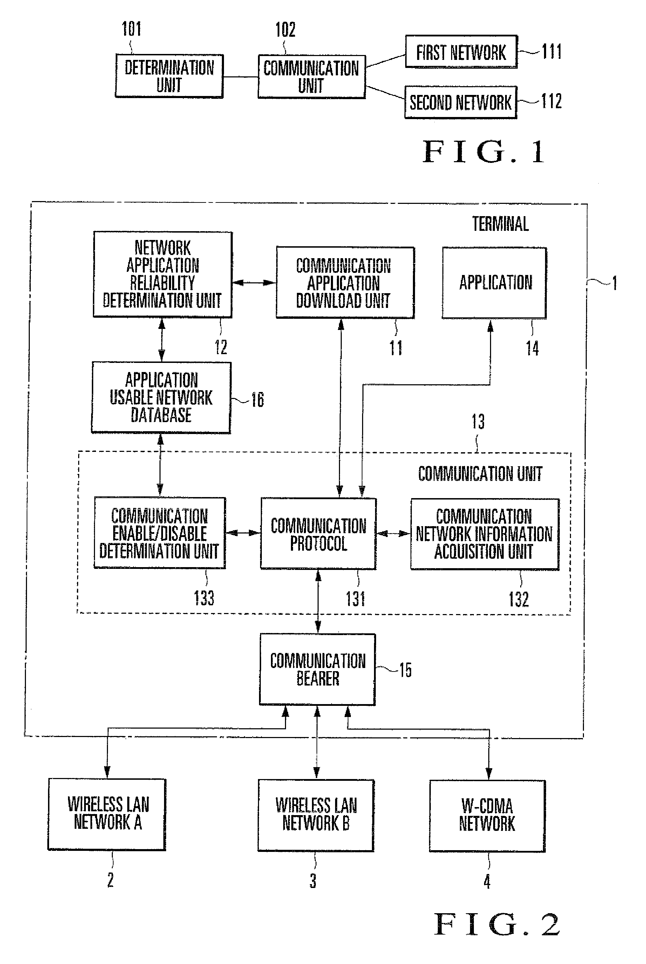

The first exemplary embodiment of the present invention will be described first. Fig. 1 shows an example of the arrangement of a communication apparatus according to the first exemplary embodiment of the present invention. The communication apparatus includes a determination unit 101 and a communication unit 102 and executes communication upon connecting to a first network 111 and a second network 112. The determination unit 101 determines a network usable by a communication application using a criterion prepared in advance, on the basis of the information of the first network 111 used to acquire the communication application and a communication state including a communication method used for the acquisition. For example, the determination unit 101 determines that the communication application can use the second network 112. The communication unit 102 executes communication by the communication application using the network determined by the determination unit 101. For example, the communication unit 102 executes communication by the communication application using the second network 112 determined as usable by the determination unit 101.

According to the first exemplary embodiment, a network usable by the communication application is determined using a criterion prepared in advance, on the basis of the information of the network used to acquire the communication application and a communication state including a communication method used for the acquisition. This allows to automatically determine a network whose use is to be permitted in executing the downloaded communication application. If, for example, no network is determined as usable, the communication unit 102 can inhibit the communication of the communication application. This enables to automatically impose communication restrictions of the application.

### [Second Exemplary Embodiment]

The second exemplary embodiment of the present invention will be described next. Fig. 2 shows an example of the arrangement of a communication apparatus according to the second exemplary embodiment of the present invention. A portable terminal 1 will be exemplified below as the communication apparatus. The terminal 1 is a portable terminal having a plurality of communication bearers (communication function units) such as a wireless LAN, VPN (Virtual Private Network), and W-CDMA and includes a communication application download unit (communication application acquisition means) 11, network application reliability determination unit 12, communication unit 13, application 14, communication bearer 15, and application usable network database 16. The terminal 1 may have a wireless LAN as a communication bearer.

The communication application download unit 11 corresponds to an application downloader in, e.g., a Java® environment. The communication application download unit 11 has not only a normal application download function but also a function of acquiring a communication state upon download, including the network (download network) used for application download and the encrypted state of the downloaded application, and sending the acquired information to the network application reliability determination unit 12 as input information necessary for determination of the network application reliability.

The network application reliability determination unit 12 receives the communication state upon download from the communication application download unit 11 and determines, based on the information, a network usable by the application. The network application reliability determination unit 12 also stores the determination information in the application usable network database 16.

The communication unit 13 corresponds to the communication function of an operating system, including a protocol stack such as TCP/IP. The communication unit 13 includes a communication protocol 131, communication enable/disable determination unit 133, and communication network information acquisition unit 132. The communication protocol 131 is a protocol stack such as TCP/IP or a communication API represented by "Socket". The communication protocol 131 has a function of shutting off communication if the application must not communicate with a communication network, in addition to a normal data transmission/reception function.

The communication enable/disable determination unit 133 corresponds to a function of acquiring the information of the network usable by the application, which is stored by the network application reliability determination unit 12, and determining whether use of the network is possible. The communication network information acquisition unit 132 determines the communication bearer 15 used for communication by the application 14 or communication application download unit 11 and notifies a necessary module of the identifier of the communication bearer 15 to be used. For example, the communication network information acquisition unit 132 identifies the connected network based on the IP address or set information of a VPN server and identifies the connected carrier based on, e.g., the communication attribute information of SIM. If it is possible to connect to a plurality of network in one place using, e.g., the bearer of a wireless LAN network, the identifier of the connected wireless network is sent. For example, the connected network is identified based on communication attribute information such as ESSID or BSSID.

The communication bearer 15 such as a wireless LAN interface or a W-CDMA interface has a function of transmitting a packet generated by the communication unit 13 or receiving a packet and transferring it to the communication unit 13. If the connected network is a wireless LAN, a necessary network may be selected from a plurality of network based on the designation of the identifier such as ESSID so that the terminal is connected to the network.

A wireless LAN network A 2 is a first wireless LAN network. A wireless LAN network B 3 is a second wireless LAN network. A W-CDMA network 4 is a carrier network represented by, e.g., W-CDMA.

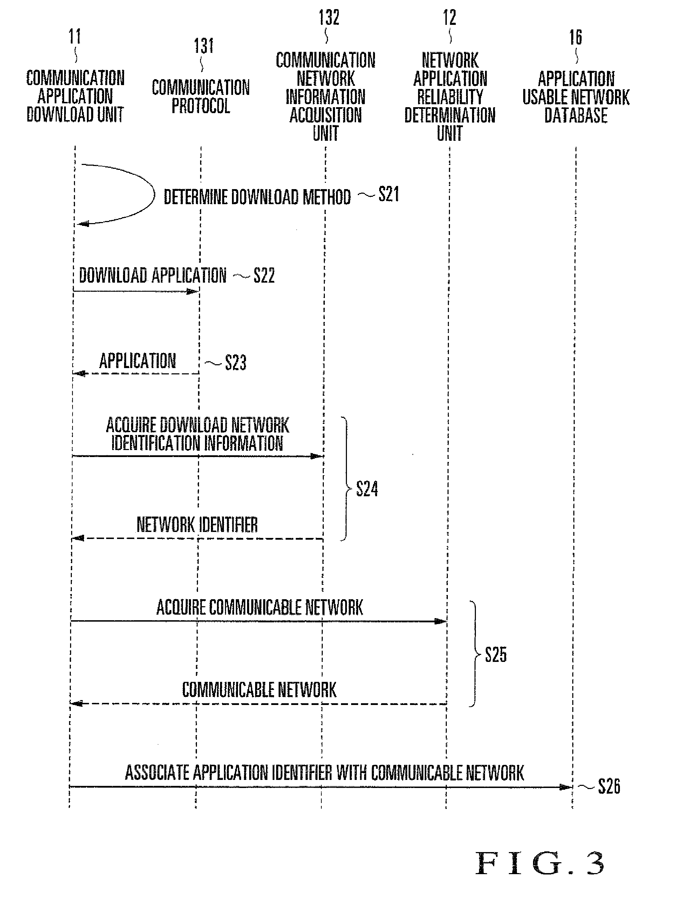

The operation of the communication apparatus (terminal 1) according to the second exemplary embodiment will be described next in detail with reference to the block diagram in Fig. 2 and the sequence chart in Fig. 3. An operation of causing the communication application download unit 11 to download the application 14 will be described first. Upon receiving a download request from the user or another program such as a browser, the communication application download unit 11 determines the download method on the basis of the URL of the download source. For example, if the prefix of the URL is "http", the communication application download unit 11 determines that the download will be done without encryption. If the prefix is "https", the communication application download unit 11 determines that a secure download path using encryption will be used (step S21).

Next, the communication application download unit 11 sends the download request to the communication protocol 131 and acquires the application 14 (step S22). The download is done using a bearer such as the wireless LAN network A 2, wireless LAN network B 3, or W-COMA network 4. The communication application download unit 11 stores the downloaded program in a storage and acquires the identification information of the downloaded application 14 by some method. For example, the communication application download unit 11 stores the downloaded program in a storage or the like and uses the file name created upon storing as application identification information (step S23).

Next, the communication application download unit 11 acquires, from the communication network information acquisition unit 132, the information of the network (download network) used for application download. For example, the communication application download unit 11 invokes the communication network information acquisition unit 132 using the IP address connected at the time of download as an argument. The invoked communication network information acquisition unit 132 specifies the used communication bearer by referring to a routing table based on the IP address and returns the information to the communication application download unit 11. If the communication bearer specified by the communication network information acquisition unit 132 is a bearer such as a wireless LAN network connectable to a plurality of networks, the communication network information acquisition unit 132 determines the communication bearer as a wireless LAN and then returns the identifier (e.g., ESSID) of the currently connected wireless LAN network to the communication application download unit 11 (step S24).

The communication application download unit 11 invokes the network application reliability determination unit 12 using the network identification information (application type) acquired in step S24 and the download method (communication method) as arguments and causes the network application reliability determination unit 12 to do determination, thereby acquiring all usable networks (step S25). The network application reliability determination unit 12 invoked by the communication application download unit 11 determines usable networks on the basis of the received information (application type and communication method) using a criterion prepared in advance.

For example, if a Java® application cannot communicate with networks other than the download source server, the network application reliability determination unit 12 determines, using the criterion shown in Table 1, whether to permit or inhibit communication.

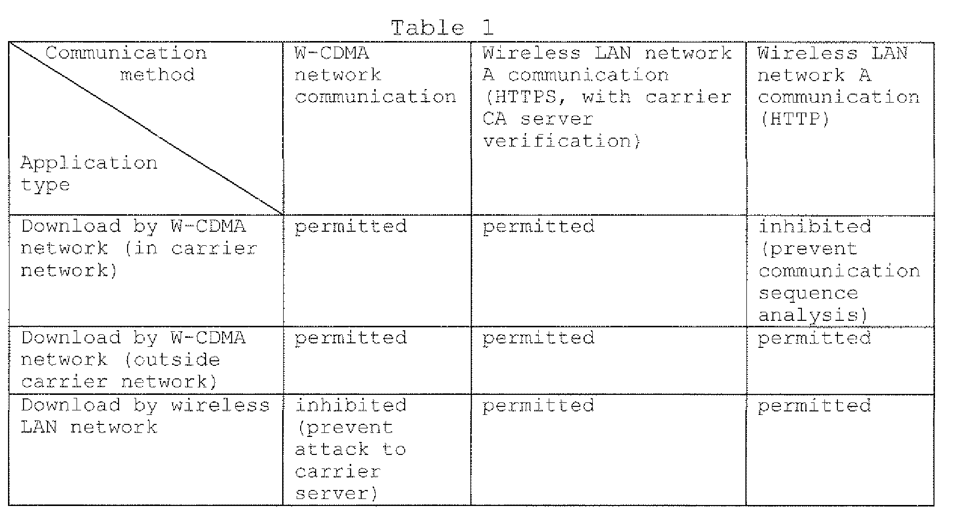

An application which communicates with a server in a reliable network where alteration or tapping of communication is impossible, or a server in a carrier network may perform communication without encrypting the communication sequence or authenticating the communication partner assuming that the network is secure. If such an application communicates with the wireless LAN network A 2 without network/server authentication, analysis of the communication sequence, rewrite of charging information, or misrepresentation of personal information may undesirably occur.

Assume that an application downloaded from a wireless LAN network where the DNS server or network is unreliable. Even when the application is a Java® application capable of communicating with only the download source server, the terminal 1 can be forced to recognize as if it were communicating with a carrier network by setting the environment of the wireless LAN network using the same DNS and IP address as those of the carrier network. In this case, the application downloaded via the wireless LAN network is preferably inhibited from communicating with the server of any carrier network. Hence, to determine a communicable network, the criterion shown in Table 1 is necessary.

The first row of Table 1 indicates a criterion for a Java® application downloaded from a W-CDMA carrier network. The downloaded Java® application requires no server authentication and is therefore inhibited from communicating with the wireless LAN network A 2 by http, where tapping or alteration of communication is impossible. However, communication with the carrier network or https communication based on server authentication by the terminal 1 is permitted because the communication sequence is neither analyzed nor altered.

The second row of Table 1 indicates a criterion for a Java® application downloaded outside a carrier network by W-CDMA carrier network communication using a proxy or the like. For example, an application is downloaded from a so-called voluntary site. In this case, since the application is downloaded from the carrier network, the DNS server of the carrier network is reliable. Since the Java® application performs communication via the proxy of the carrier network, the communication partner is also reliable. Additionally, the application assumes use of an unreliable network such as a wireless LAN. That is, the application takes a measure of self-defense against tapping or alteration of communication or transmits only data whose tapping or alteration causes no harm. For these reasons, communication in all communication paths is permitted.

The third row indicates a criterion for an application downloaded using the wireless LAN network A 2. A Java® application downloaded using the wireless LAN network A 2 is inhibited from communicating with a server in a carrier network to prevent any attack to the carrier network because the DNS server and network are unreliable. On the other hand, communication with a wireless LAN network is permitted without distinction between http and https.

After determining usable networks based on the above-described criterion, the communication application download unit 11 saves all the usable networks acquired in step S25 in the application usable network database 16 in correspondence with the application identifier (step S26).

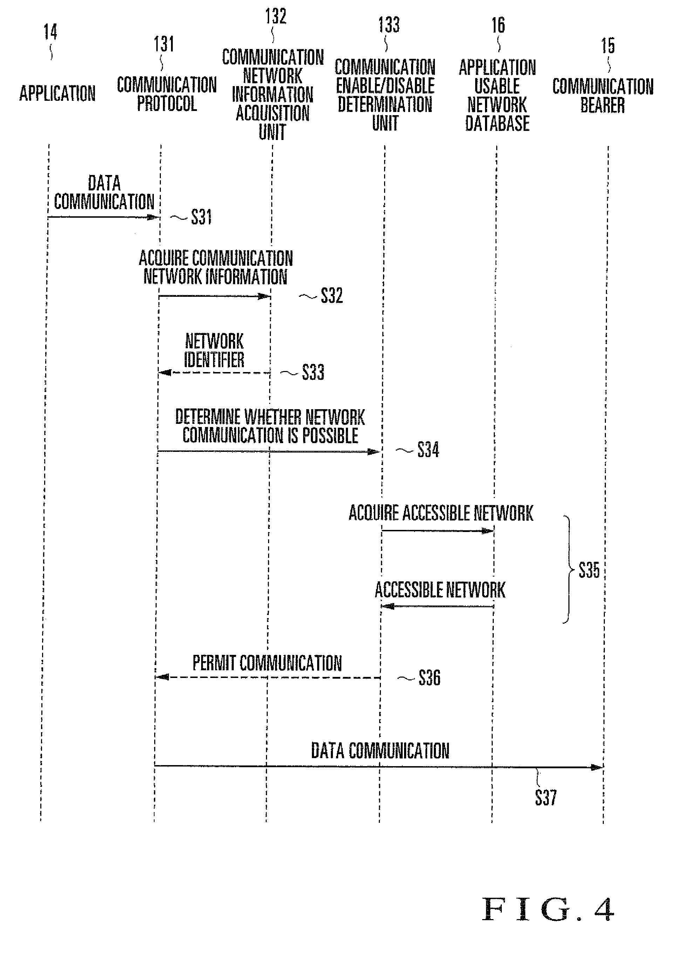

An operation of causing the application 14 to transmit data will be described next with reference to the sequence chart in Fig. 4. When the application 14 is going to transmit data to the communication protocol 131 (step S31), the communication protocol 131 acquires (requires) the identification information of the network to be used for communication from the communication network information acquisition unit 132 (step S32). In response to the request, the communication network information acquisition unit 132 specifies the used bearer by, e.g., referring to the routing table based on the IP address of the communication partner and returns the information to the communication application download unit 11 (step S33). If the bearer specified by the communication network information acquisition unit 132 is a bearer such as wireless LAN network connectable to a plurality of networks, the communication network information acquisition unit 132 determines the bearer and then returns the identifier (e.g., ESSID) of the currently connected network to the communication application download unit 11 (step S33).

Next, the communication protocol 131 invokes the communication enable/disable determination unit 133 using, as arguments, the identification information of the application that is going to perform communication such as data transmission and the network identifier acquired in steps S32 and S33 and requests to determine whether network communication is possible (step S34). When invoked, the communication enable/disable determination unit 133 acquires the information of accessible networks from the application usable network database 16 on the basis of the received application identification information (step S35). Next, the communication enable/disable determination unit 133 determines whether the network identification information passed to the argument in step S34 is included in the identification information of the accessible networks acquired in step S35 and sends an access enable/disable notification to the communication protocol 131 (step S36).

Upon receiving an access enable/disable notification representing that access is possible, the communication protocol 131 executes the transmission request of the application (step S37). If access is not possible, the communication protocol 131 makes the transmission request of the application fail.

### [Third Exemplary Embodiment]

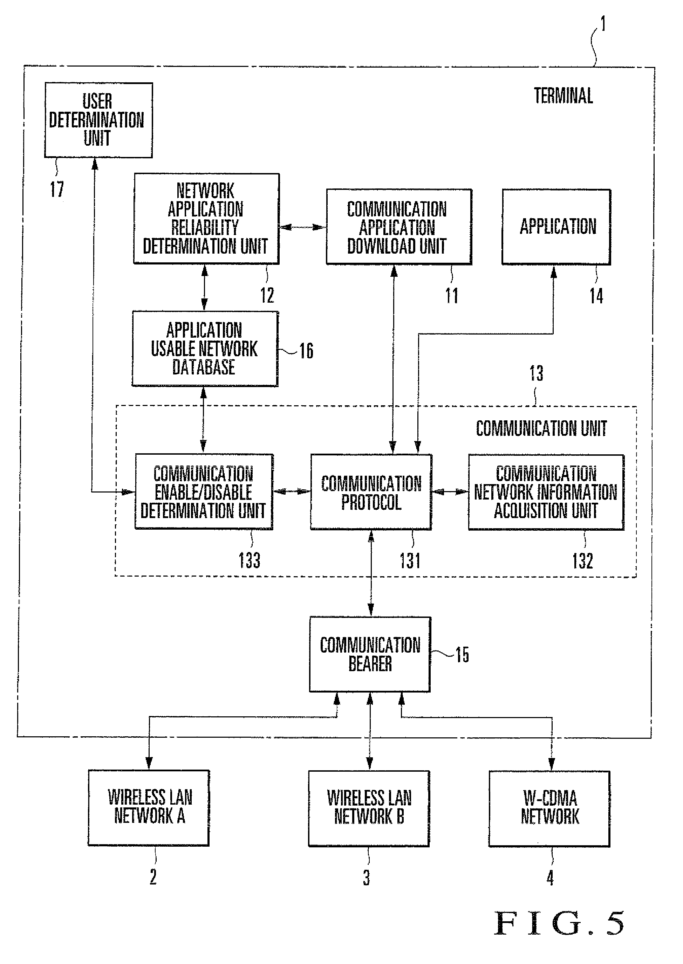

The third exemplary embodiment of the present invention will be described next. In the third exemplary embodiment, a means for inquiring of a user about whether communication is possible is added to the communication apparatus of the above-described second exemplary embodiment. To implement this arrangement, in the third exemplary embodiment, a user determination unit 17 is added, as shown in Fig. 5. When communication enable/disable determination is necessary, the user determination unit 17 receives network identification information from another portion such as a communication unit 13. The received network identification information or information to determine a network is presented to the user. Additionally, a communication enable/disable input is received, and the received communication enable/disable determination information is returned to the other portion that has input the network identification information.

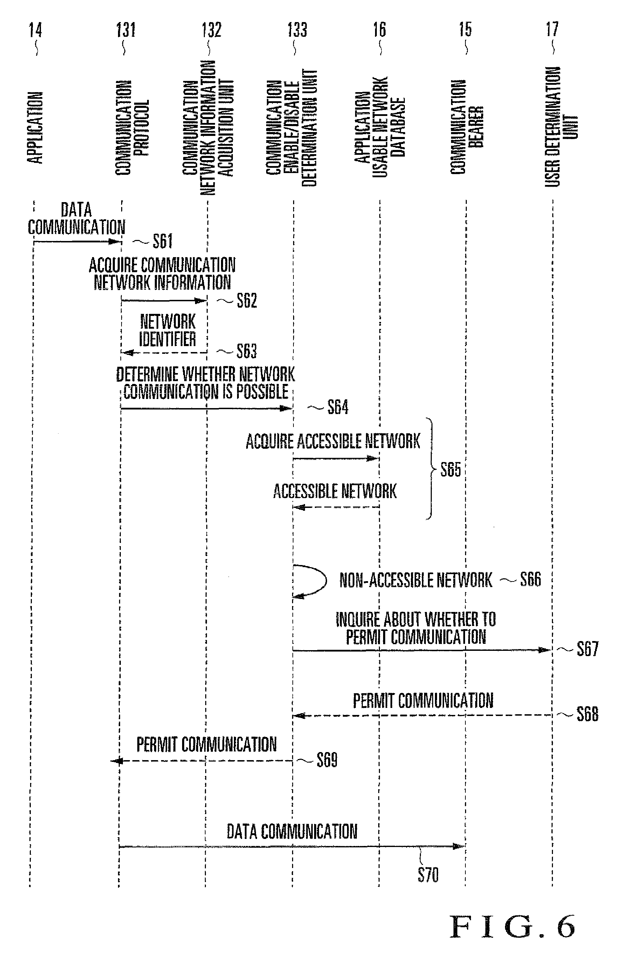

An example of the operation of the communication apparatus according to the third exemplary embodiment will be described below with reference to the sequence chart in Fig. 6. When an application 14 is going to transmit data to a communication protocol 131 (step S61), the communication protocol 131 acquires (requires) the identification information of the network to be used for communication from a communication network information acquisition unit 132 (step S62). In response to the request, the communication network information acquisition unit 132 specifies the used bearer by, e.g., referring to the routing table based on the IP address of the communication partner and returns the information to a communication application download unit 11 (step S63). If the bearer specified by the communication network information acquisition unit 132 is a bearer such as wireless LAN network connectable to a plurality of networks, the communication network information acquisition unit 132 determines the bearer and then returns the identifier (e.g., ESSID) of the currently connected network to the communication application download unit 11 (step S63).

Next, the communication protocol 131 invokes a communication enable/disable determination unit 133 using, as arguments, the identification information of the application that is going to perform communication such as data transmission and the network identifier acquired in steps S62 and S63 and requests to determine whether network communication is possible (step S64). When invoked, the communication enable/disable determination unit 133 acquires the information of accessible networks from the application usable network database 16 on the basis of the received application identification information (step S65)

The communication enable/disable determination unit 133 determines whether the network identification information passed to the argument in step S64 is included in the identification information of the accessible networks acquired in step S65. If access is not possible (step S66), the communication enable/disable determination unit 133 notifies the user determination unit 17 of the network identification information (step S67).

The user determination unit 17 converts the network identification information received from the communication enable/disable determination unit 133 into network display information having a format understandable by the user. If the user can directly understand the network identification information received from the communication enable/disable determination unit 133, the network identification information is used as the network display information. The user determination unit 17 presents, to the user, the network display information in a selection dialogue box in a visible state and causes the user to determine whether connection is possible. If the user has input an instruction to permit communication, the user determination unit 17 sends a communication permission notification to the communication enable/disable determination unit 133 (step S68). On the other hand, if the user has rejected communication, the user determination unit 17 sends a communication reject notification to the communication enable/disable determination unit 133.

If communication is permitted, the communication enable/disable determination unit 133 permits the communication to be established by the application 14 in accordance with the result from the user determination unit 17 (step S69). On the other hand, if communication is rejected, the communication enable/disable determination unit 133 rejects the communication to be established by the application 14.

Upon receiving an access enable/disable notification representing that access is possible, the communication protocol 131 executes the transmission request of the application (step S70). If access is not possible, the communication protocol 131 makes the transmission request of the application fail.

An operation of causing the communication application download unit 11 in the communication apparatus of the third exemplary embodiment to download the application 14 is the same as that of the communication apparatus of the second exemplary embodiment described with reference to the sequence chart in Fig. 3.

The communication apparatus according to each of the above-described exemplary embodiment is a computer device (server) having a CPU, main memory, external memory, network connection device, and the like. The CPU operates on the basis of a program expanded on the main memory, thereby implementing the above-described functions. The functions may be distributed to a plurality of computer devices.

This application is based upon and claims the benefit of priority from Japanese patent application No. 2007-155768, filed June 12, 2007, the disclosure of which is incorporated herein in its entirety by reference, and various changes and modifications may be made without departing from the spirit and scope of the present invention.

### Industrial Applicability

The function of imposing function execution restrictions depending on a communication network according to an exemplary aspect of the present invention is applicable to a communication apparatus.

## Claims

1. A communication apparatus **characterized by** comprising at least:
determination means for determining, on the basis of information of a network used to acquire a communication application and a communication state including a communication method used for acquisition, a network usable by the communication application using a criterion prepared in advance; and
communication means for executing communication by the communication application using the network determined by said determination means.

2. An apparatus according to claim 1, **characterized in that** said communication means inhibits communication by the communication application when no network is determined as usable by said determination means.

3. An apparatus according to claim 1, **characterized by** further comprising user determination means for, when no network is determined as usable by said determination means, inquiring of a user about a reliable network and receiving determination information input by the user,
wherein said communication means executes communication by the communication application on the basis of the determination information received by said user determination means.

4. An apparatus according to claim 1, **characterized by** further comprising communication application acquisition means for acquiring the communication application.

5. A communication method **characterized by** comprising at least the steps of:
determining, on the basis of information of a network used to acquire a communication application and a communication state including a communication method used for acquisition, a network usable by the communication application using a criterion prepared in advance; and
executing communication by the communication application using the determined network.

6. A method according to claim 5, **characterized in that** the communication executing step comprises the step of inhibiting communication by the communication application when no network is determined as usable.

7. A method according to claim 5, **characterized by** further comprising the step of, when no network is determined as usable, inquiring of a user about a reliable network and receiving determination information input by the user,
wherein in the communication executing step, communication by the communication application is executed on the basis of the received determination information.

8. A method according to claim 5, **characterized by** further comprising the step of acquiring the communication application.

9. A computer-readable storage medium storing a program for causing a computer to implement at least:
a function of determining, on the basis of information of a network used to acquire a communication application and a communication state including a communication method used for acquisition, a network usable by the communication application using a criterion prepared in advance; and
a function of executing communication by the communication application using the determined network.

10. A medium according to claim 9, **characterized in that** the communication executing function comprises a function of inhibiting communication by the communication application when no network is determined as usable by the determining function.

11. A medium according to claim 9, **characterized by** further comprising a function of, when no network is determined as usable by the determining function, inquiring of a user about a reliable network and receiving determination information input by the user,
wherein the communication executing function executes communication by the communication application on the basis of the determination information received by the user determining function.

12. A medium according to claim 9, **characterized by** further comprising a function of acquiring the communication application.
